# EUROPÄISCHE PATENTANMELDUNG

(11) **EP 1 089 447 A2**
(43) Veröffentlichungstag der Anmeldung: **04.04.2001**
(21) Anmeldenummer: 00117041.4
(22) Anmeldetag: 09.08.2000
(51) Int. Cl.: H04B 1/38, H04M 1/60

(54) **Verfahren zur Wiedergabe eines Audio-Signals eines Mobiltelefons mit einem Autoradio und Autoradio mit einer Freisprecheinrichtung für ein Mobiltelefon**

(30) Priorität: 28.09.1999 DE 19946344
(71) Anmelder: ROBERT BOSCH GMBH, 70442 Stuttgart (DE)
(72) Erfinder: Kaesser, Jürgen, 31199 Diekholzen (DE)

(57) **Zusammenfassung**

Ein Verfahren zur Wiedergabe eines Audiosignals eines Mobiltelefons (1) mit einem Autoradio, wobei das Mobiltelefon (1) über eine Audio-Eingangsschnittstelle (2) des Autoradios mit einem Audio-Verstärker (4) verbunden ist und der Verstärkungsfaktor des Audio-Verstärkers (4) steuerbar ist, hat die Schritte:
- Erkennen eines Freisprechmodus, wenn das Mobiltelefon (1) in den Gesprächsbetrieb genommen wird;
- Umschalten des Verstärkungsfaktors (v) des Audio-Verstärkers (4) auf einen vordefinierten Wert, sobald ein Freisprechmodus erkannt wird.

## Beschreibung

Die Erfindung betrifft ein Verfahren zur Wiedergabe eines Audio-Signals eines Mobiltelefons mit einem Autoradio, wobei das Mobiltelefon über eine Audio-Eingangsschnittstelle des Autoradios mit einem Audio-Verstärker verbunden ist und der Verstärkungsfaktor des Audio-Verstärkers steuerbar ist. Die Erfindung betrifft weiterhin ein Autoradio mit einer Freisprecheinrichtung für ein Mobiltelefon zur Wiedergabe eines Audio-Signals des Mobiltelefons mit einer Audio-Eingangsschnittstelle für das Mobiltelefon und einem an die Audio-Eingangsschnittstelle gekoppelten Audio-Verstärker.

Bei der Verwendung von Mobiltelefonen in Kraftfahrzeugen besteht das Problem einer schlechten Verständlichkeit aufgrund des relativ hohen Geräuschpegels der Umgebung. Zudem bestehen bei dem Telefonieren am Steuer von Kraftfahrzeugen erhebliche Sicherheitsrisiken. Es ist daher bekannt, Mobiltelefone in Kraftfahrzeugen an gesonderte Freisprech-Einrichtungen zu schalten, die mindestens einen Audio-Verstärker zur Verstärkung des Audio-Signals des Mobiltelefons und einen Lautsprecher zur Wiedergabe des Audio-Signals haben. Zusätzlich können die Freisprecheinrichtungen auch noch ein Mikrophon zur Aufnahme von Audio-Signalen haben.

Es ist weiterhin bekannt, Mobiltelefone an ein Autoradio des Kraftfahrzeuges zu schalten, das als Freisprecheinrichtung dient. Gleichermaßen kann der Lautsprecherausgang einen in dem Kraftfahrzeug eingebauten Koppelstation für Mobiltelefone an das Autoradio angeschlossen werden. Durch den Betrieb von Mobiltelefonen an Autoradios kann die Verständlichkeit gegenüber der Wiedergabe über separate Freisprecheinrichtungen deutlich gesteigert werden. Zudem kann der Audio-Verstärker und der Lautsprecher in der Freisprecheinrichtung eingespart werden.

Mobiltelefone und Autoradios sind in ihren Schnittstellen jedoch nicht aufeinander abgestimmt, so daß es bei der Wiedergabe zu Rauschen oder zur Übersteuerung des Audio-Verstärkers kommt.

Zur Lösung dieser Problematik wird unter Verwendung eines Audio-Verstärkers des Autoradios mit steuerbarem Verstärkungsfaktor vorgeschlagen:
- einen Freisprechmodus zu erkennen, wenn das Mobiltelefon in den Gesprächsbetrieb genommen wird, und
- den Verstärkungsfaktor des Audio-Verstärkers auf einen vordefinierten Wert umzuschalten, sobald ein Freisprechmodus erkannt ist.

Dadurch, daß ein Audio-Verstärker an der Audio-Eingangsschnittstelle verwendet wird, dessen Verstärkungsfaktor steuerbar ist, kann der Pegel der Audio-Eingangsschnittstelle an den tatsächlich eingespeisten Signalpegel angepaßt werden. Im Freisprechmodus, d. h. wenn das Mobiltelefon an dein Autoradio betrieben wird und ein Gespräch stattfindet, wird der Verstärkungspegel jedoch nicht nachgeregelt, sondern auf einen vordefinierten Wert eingestellt, der für das Mobiltelefon in einem vorherigen Eichvorgang als optimaler Verstärkungsfaktor bestimmt wurde. Der Audio-Verstärker kann zum Beispiel beim Anschluß anderer Peripherie-Geräte, wie z. B. CD-Spieler, auf einen Verstärkungsfaktor v=1 eingestellt werden. Im Freisprechmodus wird der Verstärkungsfaktor dann umgeschaltet, wobei vorzugsweise ein Verstärkungsfaktor v < 1 verwendet wird.

Es ist vorteilhaft, den vordefinierten Wert für den Verstärkungsfaktor, der im Freisprechmodus eingestellt wird, durch die Schritte zu bestimmen von:
- Messen des Eingangssignalpegels an der Audio-Eingangsschnittstelle des Autoradios im Gesprächsbetrieb des Mobiltelefons über eine definierte Zeit;
- Bilden des Mittelwertes der gemessenen Eingangssignalpegelwerte;
- Festlegen des Verstärkungsfaktors, so daß die Differenz zwischen dem gebildeten Mittelwert der gemessenen Eingangssignalpegelwerte und einem Vergleichspegel minimal ist.

Um Lautstärkeschwankungen zu vermeiden, ist es vorteilhaft, den Vorgang der Ermittlung der einzustellenden Verstärkung, d. h. des vordefinierten Wertes für den Verstärkungsfaktor, von der Umstellung des Verstärkungsfaktors zu trennen. In einem einmaligen Eichvorgang, der z.B. über die Tastatur des Autoradios während des ersten Telefongesprächs vom Nutzer veranlaßt wird, erfolgt eine Messung und Mittelung des Eingangssignalpegels über eine definierte Zeit, vorzugsweise einige Sekunden. Der optimale Verstärkungsfaktor wird so bestimmt, daß der gemittelte Eingangssignalpegel optimal an den Signalpegel am Ausgang des Audio-Verstärkers angepaßt ist. Hierzu ist in Autoradios üblicherweise ein Vergleichspegel geschaltet, so daß der Verstärkungsfaktor aus der Differenz zwischen dem gemittelten Eingangssignalpegel und dem Vergleichspegel berechnet werden kann.

Der Verstärkungsfaktor des Audio-Verstärkers wird vorzugsweise mit einem schaltbaren Widerstandsnetzwerk eingestellt, wobei der vordefinierte Wert des Verstärkungsfaktors für den Freisprechmodus als Schaltkombination für das Widerstandsnetzwerk abgespeichert wird. Erfolgt nun ein Umschalten des Verstärkungsfaktors, nachdem ein Gesprächsbetrieb erkannt wurde, wird dann lediglich die abgespeicherte Schalterkonfiguration für das Widerstandsnetzwerk abgerufen, mit dein das Widerstandsnetzwerk mit Hilfe einer digitalen Logik geschaltet wird.

Zum Erkennen eines Freisprechmodus, wenn das Mobiltelefon in den Gesprächsbetrieb genommen wird, wird vorgeschlagen, daß ein bestimmtes Frequenzband, d. h. eine Frequenzbandbreite, des Audio-Signals des Mobiltelefons kontinuierlich von dem Audio-Verstärker verstärkt und wiedergegeben wird. Sobald der Nutzer an dem wiedergebenen Audio-Signal erkennt, daß ein Gespräch angefordert wird, oder wenn er von sich aus ein Gespräch beginnt, schaltet der Nutzer ausschließlich das Mobiltelefon an den Audio-Verstärker und koppelt sonstige Peripherie-Geräte von der Audio-Eingangsschnittstelle ab. Gleichzeitig wird der Verstärkungsfaktor des Audio-Verstärkers auf den vordefinierten Wert umgeschaltet. Dieses Verfahren zur Erkennung eines Freisprechmodus erfordert zwar kaum Änderungen an dem Autoradio. Nachteilig ist jedoch, daß eine Interaktion des Nutzers erforderlich ist.

Es ist daher vorteilhaft, wenn ein Freisprechmodus durch Auswertung einer entsprechenden Telefon-Mute-Kennung des Mobiltelefons erfolgt, wobei die Telefon-Mute-Kennung an einem Anschluß des Mobiltelefons bereitgestellt ist und einen Gesprächsbetrieb bzw. einen eingehenden Telefonanruf signalisiert. Dieses Verfahren hat jedoch den Nachteil, daß die Schaltung des Autoradios verändert werden muß.

Besonders vorteilhaft ist es, wenn ein Freisprechmodus durch Auswerten von Störungen bei einer definierten Frequenz des Audio-Signals erkannt wird. Die definierte Frequenz sollte bei etwa 217 Hz liegen, da in diesem Frequenzbereich erfahrungsgemäß die Störungen von Mobiltelefonen auftreten. Dieses Verfahren kann vorteilerhafterweise mit den vorhandenen Bauteilen, insbesondere mit der Schaltung zur Pegelerkennung, die für den Eichvorgang notwendig ist, realisiert werden. Die Auswertung des Störsignals kann mit Hilfe des in Autoradios ohnehin vorhandenen Mikroprozessors erfolgen.

Die Störungen sollten eine definierte Zeit auftreten, um zu vermeiden, daß im Stand-by-Modus von Mobiltelefonen auftretende kurzzeitige Störungen, als Gesprächsbetrieb erkannt werden. Die definierte Zeit sollte einige 100 Millisekunden, d.h. ca. 100 bis 1000 Millisekunden, betragen.

Zur Durchführung des Verfahrens hat das Autoradio eine Störungsschaltung zum Umschalten des Verstärkungsfaktors des Audio-Verstärkers auf einen vordefinierten Wert, so daß ein Freisprechmodus durch einen Gesprächsbetrieb des Mobiltelefons erkannt wird.

Für den Eichvorgang, d.h. zum Bestimmen des vordefinierten Wertes des Verstärkungsfaktors ist eine Einrichtung zum Messen des Eingangssignalpegels der Audio-Eingangsschnittstelle des gemessenen Eingangssignalpegels und zur Bildung des Mittelwertes, eine Pegelvergleichseinrichtung zum Berechnen des vordefinierten Wertes des Verstärkungsfaktors durch Minimieren der Differenz des gebildeten Mittelwertes und eines Vergleichpegels, und einem Speicher für den berechneten vordefinierten Wert vorgesehen.

Weiterhin ist ein schaltbares Widerstandsnetzwerk zum Einstellen des Verstärkungsfaktors des Audio-Verstärkers vorgesehen, daß vorzugsweise in den Rückkoppelungskreis an den Eingang und den Ausgang des Audio-Verstärkers geschaltet ist. Das Autoradio ist so ausgebildet, daß der vordefinierte Wert des Verstärkungsfaktors für den Freisprechmodus als Kombination der zur Einstellung der vordefinierten Verstärkung zu schaltenden Widerstände abgespeichert wird. Hierzu verfügt das Autoradio über eine entsprechende Schaltlogik.

Die Pegelvergleichseinrichtung zum Bestimmen des vordefinierten Wertes des Verstärkungsfaktors während des Eichvorgangs ist vorzugsweise über eine Reihenschaltung von Gleichrichter, Tiefpass, Analog/Digital-Wandler und digitalem Tiefpaß an den Ausgang des Verstärkers geschaltet.

Zum Erkennen eines Freisprechmodus kann ein Schaltelement vorgesehen sein, daß vom Nutzer betätigt wird, wenn das Mobiltelefon in den Gesprächsbetrieb geschaltet wird. Damit jederzeit Audio-Signale des Mobiltelefons, insbesondere Klingelzeichen, verständlich wiedergegeben werden können, ist eine Frequenzbandbreite des Audio-Signals des Mobiltelefons kontinuierlich an den Audio-Verstärker geschaltet. Erst wenn der Nutzer mit dem Schaltelement das Autoradio in den Freisprechmodus schaltet, wird das Mobiltelefon ausschließlich an den Audio-Signaleingang geklemmt und der Verstärkungsfaktor auf den vordefinierten Wert umgeschaltet.

Zum automatischen Umschalten auf den Freisprechmodus kann das Autoradio eine zusätzliche Schnittstelle zum Anschluß an eine Telefon-Mute-Signalleitung des Mobiltelefons haben, an der der Gesprächsbetrieb bzw. das Ankommen eines Telefonats signalisiert wird.

Das Autoradio kann nahezu ohne Veränderung der Hardware zum Erkennen eines Freisprechmodus ausgebildet sein, wenn das Erkennen eines Freisprechmodus durch Auswertung von Störungen bei einer definierten Frequenz des Audio-Signals an dem Audio-Verstärker erfolgt. Die definierte Frequenz sollte bei etwa 217 Hz liegen. Bei dieser Frequenz treten erfahrungsgemäß aufgrund des Time-Multiplex-Betriebes des Mobiltelefons Störungen bei GSM-Mobiltelefonen auf, die jedoch in der nachfolgenden Schaltung des Autoradios unterdrückt werden. Als Schaltung zur Störungserkennung können vorteilhafterweise Schaltungen verwendet werden, wie sie zur Erkennung des Verkehrsfunk-Durchsagesignals (ARI-DK) bekannt sind. Zusätzlich kann die Erkennungsschaltung durch eine Pegelerkennungsschaltung unterstützt werden, die auch für den Eichvorgang zum Bestimmen des definierten Wertes des Verstärkungsfaktors dient. Mit Hilfe der Pegelerkennungsschaltung kann auf einen ankommenden Telefonanruf geschlossen werden, wenn sich der Pegel an der Audio-Eingangsschnittstelle in einem bestimmten Maße verändert. Für den Eichvorgang und die Erkennung des Freisprechmodus kann die Pegelerkennungsschaltung mit unterschiedlichen Zeitkonstanten betrieben werden.

Die Erfindung wird nachfolgend anhand der beigefügten Zeichnungen näher erläutert.

Es zeigen:
- Fig. 1: Blockschaltbild der erfindungsgemäßen Schaltung zum Erkennen eines Freisprechmodus und Umschalten des Verstärkungsfaktors;
- Fig. 2: Blockschaltbild der erfindungsgemäßen Schaltung zum Auswerten von Signalstörungen zur Erkennung eines Freisprechmodus.

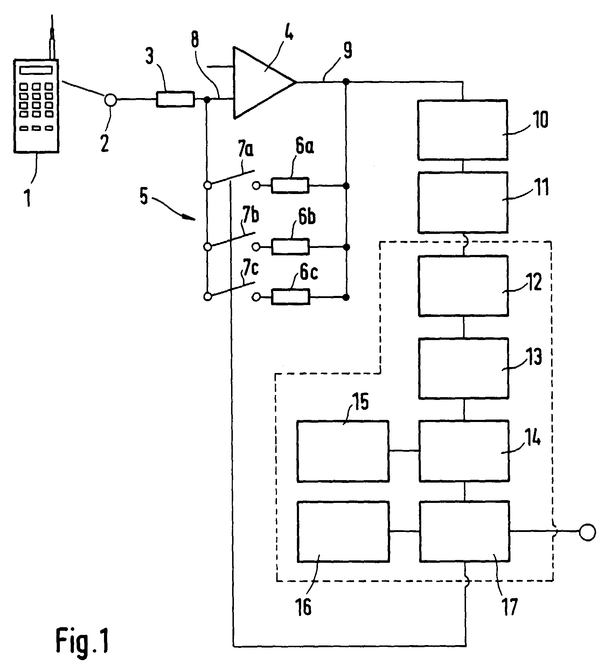

Die Fig. 1 läßt ein Blockschaltbild der erfindungsgemäßen Schaltung zum Erkennen eines Freisprechmodus eines Mobiltelefons 1 und zum Umschalten des Verstärkungsfaktors v auf einen vordefinierten Wert erkennen. Die Schaltung ist zudem zur Durchführung eines Eichvorgangs ausgebildet, um einen optimalen vordefinierten Wert für den Verstärkungsfaktor v zu bestimmen, wenn das Mobiltelefon 1 im Gesprächsbetrieb ist. Die dargestellte Schaltungsanordnung ist in dem Autoradio implementiert. Das Mobiltelefon 1 und gegebenenfalls weitere Peripheriegeräte, wie z.B. ein CD-Spieler, wird an eine Audio-Eingangsschnittstelle 2 des Autoradios angeschlossen, die über einen Widerstand 3 mit einem rauscharmen Audio-Verstärker 4 verbunden ist. Der Audio-Verstärker 4 ist mit einem Widerstandsnetzwerk 5 so geschaltet, daß der Verstärkungsfaktor v im Bereich 0 bis 1 einstellbar ist. Im Normalbetrieb, d. h. wenn das Autoradio nicht im Freisprechmodus bzw. das Mobiltelefon nicht im Gesprächsbetrieb ist, wird der Verstärkungsfaktor auf 1 eingestellt, da der Signalpegel an der Audio-Eingangsschnittstelle 2 werkseitig bereits an die üblichen Peripherie-Geräte, wie z.B. CD-Spieler, angepaßt ist. Das Widerstandsnetzwerk besteht aus mehreren Widerständen 6a, 6b, 6c, und entsprechenden Schaltern 7a, 7b, 7c, die jeweils parallel zu dem Verstärker an den Verstärkereingang 8 und den Verstärkerausgang 9 geschaltet sind. Das Widerstandsnetzwerk 5 ist damit in den Rückkoppelkreis des Audio-Verstärkers 4 geklemmt. In Abhängigkeit von der Anzahl N der Widerstände 6a, 6b, 6c können damit 2^{N} Verstärkungsfaktoren eingestellt werden und es ergeben sich entsprechend 2^{N} Widerstandskombinationen.

Der Signalpegel, d. h. der Gleichspannungs-Offset (DC-Offset) wird bestimmt, indem an den Verstärkerausgang 9 ein Gleichrichter 10 zum Ausfiltern des Gleichspannungssignals, ein Tiefpass 11 und ein Analog/Digital-Wandler 12 und ein digitaler Tiefpass 13 geschaltet ist. Das an dem digitalen Tiefpass 13 anliegende Signal entspricht dem DC-Offset bzw. dem Signalpegel am Verstärkerausgang 9. Dieser Signalpegel wird über eine definierte Zeit, d. h. über einige Sekunden, mit einer Einrichtung 14 gemessen und gemittelt. Der mit der Einrichtung 14 bestimmte Mittelwert des Eingangssignalpegels wird in einer Pegelvergleichseinrichtung 15 mit einem werkseitig gespeicherten Vergleichspegel verglichen und aus der Differenz des Eingangssignalpegels und des Vergleichspegels wird ein optimaler Verstärkungsfaktor v bestimmt. Der werkseitig eingestellte Vergleichspegel ist üblicherweise für den Anschluß von Peripherie-Geräten, wie z.B. CD-Spieler, an die Audio-Eingangsschnittstelle 2 optimiert.

Der auf diese Weise bestimmte optimale Verstärkungsfaktor v für den Freisprechmodus wird als, Schalterkombination für das Widerstandsnetzwerk 5 in einem Speicher 16 abgelegt. Es ist weiterhin eine Logikschaltung 17 vorgesehen, um das Widerstandsnetzwerk 5 anzusteuern.

Während des Betriebs des Autoradios wird auf die nachfolgend beschriebene Weise ermittelt, ob ein Freisprechmodus vorliegt, d.h. ob sich das Mobiltelefon 1 im Gesprächsbetrieb befindet. Sobald ein Umschaltsignal 18 zum Umschalten auf den Freisprechmodus anliegt, wird der vordefinierte Wert für den Verstärkungsfaktor aus dem Speicher 16 ausgelesen und mit Hilfe der Logikschaltung 17 wird das Widerstandsnetzwerk 5 geschaltet und das Autoradio in den Freisprechbetrieb versetzt. Dann ist das Mobiltelefon 1 optimal auf den Signalpegel des Autoradios angepaßt, so daß Rauschen und Übersteuerung vermindert wird. Durch den gesonderten Eichvorgang und das feste Einstellen des Verstärkungsfaktors v auf den vordefinierten Wert werden Lautstärkeschwankungen vermieden.

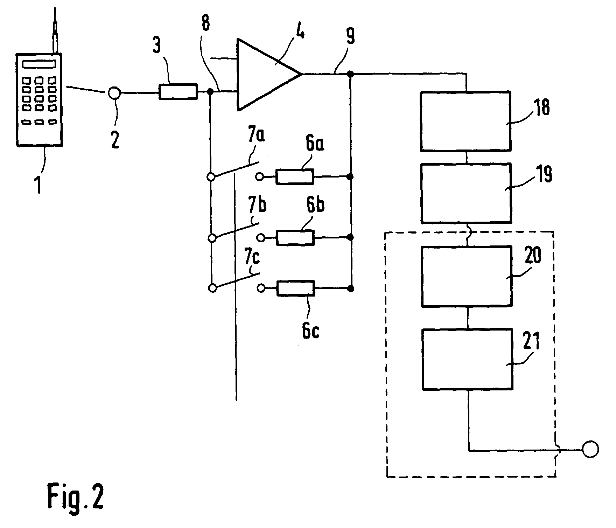

Die Fig. 2 zeigt ein Blockschaltbild der erfindungsgemäßen Schaltung zur Erkennung des Freisprechmodus. An den Audio-Verstärker 4 ist zusätzlich zu der in der Fig. 1 dargestellten Schaltung eine Reihenschaltung aus einem Bandpass 18, einem Verstärker 19 und einem Analog/Digital-Wandler 20 vorgesehen. Der Bandpass 18 ist vorzugsweise auf eine Frequenz von 217 Hz eingestellt, bei der Störungen im Gesprächsbetrieb von Mobiltelefonen 1 auftreten. Alternativ zu dem Bandpaß 18 kann auch ein Tiefpass verwendet werden.

Es kann auch die in der Fig. 1 dargestellte Reihenschaltung eingesetzt werden, wobei Störungen des Gleichspannungssignals zur Erkennung des Freisprechmodus ausgewertet werden. Hierzu ist an den Analog/Digital-Wandler 20 eine Einrichtung 21 zur Erkennung von Störungen gekoppelt. Diese Einrichtung kann eine entsprechende digitale Signalverarbeitungsschaltung oder ein Programm in dem Mikroprozessor des Autoradios sein. Wenn Störungen über eine definierte Zeit, d. h. über einige 100 Millisekunden (ca. 100 - 1000 Millisekunden) erkannt werden, erfolgt die Generierung des Umschaltsignals.

Die dargestellte Schaltung zur Erkennung des Freisprechmodus kann zusätzlich mit der in der Fig. 1 dargestellten Pegelvergleichseinrichtung 15 unterstützt werden. Die Pegelvergleichseinrichtung 15 kann in diesem Falle dazu verwendet werden, einen gemittelten Eingangssignalpegel mit bestimmten Signalpegeln zu vergleichen, die üblicherweise beim Ankommen eines Telefonats oder im Gesprächsbetrieb des Mobiltelefons 1 auftreten. Sie kann hierfür mit unterschiedlichen Zeitkonstanten betrieben werden.

Als Einrichtung 21 zur Erkennung des Freisprechmodus durch Störungen der Signale kann auch eine bekannte Schaltung zur Erkennung des Verkehrsfunk-Durchsagesignals ARI-DK genutzt werden, die z. B. als geschlossener Phasenregelkreis PLL ausgeführt sein kann.

Da die zur Erkennung genutzten Störsignale auch während des Aussendens von Nicht-Sprachdaten oder bei längeren Short-Messages durch das Mobiltelefon auftreten, sollte die Einrichtung 21 eine Möglichkeit zur Unterdrückung des Umschaltens auf das Mobiltelefon bieten.

Der Schaltungsaufwand kann verringert werden, indem die in den Fig. 1 und 2 gestrichelt eingerahmten Schaltungsteile in dem im Autoradio ohnehin vorhandenen Mikro-Controller realisiert werden.

## Patentansprüche

1. Verfahren zur Wiedergabe eines Audio-Signals eines Mobiltelefons (1) mit einem Autoradio, wobei das Mobiltelefon (1) über eine Audio-Eingangsschnittstelle (2) des Autoradios mit einem Audio-Verstärker (4) verbunden ist und der Verstärkungsfaktor (v) des Audio-Verstärkers (4) steuerbar ist, **gekennzeichnet durch** die Schritte:
- Erkennen eines Freisprechmodus, wenn das Mobiltelefon (1) in den Gesprächsbetrieb genommen wird;
- Umschalten des Verstärkungsfaktors (v) des Audio-Verstärkers (4) auf einen vordefinierten Wert, sobald ein Freisprechmodus erkannt ist.

2. Verfahren nach Anspruch 1, **dadurch gekennzeichnet, daß** der vordefinierte Wert für den Verstärkungsfaktor (v), der im Freisprechmodus eingestellt wird, bestimmt wird durch:
- Messen des Eingangssignalpegels an der Audio-Eingangsschnittstelle (2) des Autoradios im Gesprächsbetrieb des Mobiltelefons über eine definierte Zeit;
- Bilden des Mittelwertes der gemessenen Eingangssignalpegelwerte;
- Festlegen des Verstärkungsfaktors (v), so daß die Differenz zwischen dem gebildeten Mittelwert der gemessenen Eingangssignalpegelwerte und einem Vergleichspegel minimal ist.

3. Verfahren nach Anspruch 1 oder 2, **gekennzeichnet durch** Einstellen des Verstärkungsfaktors (v) des Audio-Verstärkers (4) mit einem schaltbaren Widerstandsnetzwerk (5) und Abspeichern des vordefinierten Wertes des Verstärkungsfaktors (v) als Kombination der für den vordefinierten Verstärkungsfaktor (v) zu schaltenden Widerstände (6a, 6b, 6c).

4. Verfahren nach einem der vorhergehenden Ansprüche, **dadurch gekennzeichnet**, daß eine Frequenzbandbreite des Audio-Signals des Mobiltelefons (1) kontinuierlich von dem Audio-Verstärker (4) verstärkt und wiedergegeben wird und der Verstärkungsfaktor (v) des Audio-Verstärkers (4) auf den vordefinierten Wert umgeschaltet wird, wenn ausschließlich das Mobiltelefon (1) an den Audio-Verstärker (4) geschaltet ist.

5. Verfahren nach einem der vorhergehenden Ansprüche, **gekennzeichnet durch** Erkennen eines Freisprechmodus durch Auswerten einer entsprechenden Telefon-Mute-Kennung des Mobiltelefons (1) zur Signalisierung eines Gesprächbetriebs bzw. eines eingehenden Telefonanrufes.

6. Verfahren nach einem der vorhergehenden Ansprüche, **gekennzeichnet durch** Erkennen eines Freisprechmodus durch Auswerten von Störungen bei einer definierten Frequenz des Audiosignals an dem Audio-Verstärker (4).

7. Verfahren nach Anspruch 6, **dadurch gekennzeichnet,** daß die definierte Frequenz bei etwa 217 Hz liegt.

8. Verfahren nach Anspruch 6 oder 7, **dadurch gekennzeichnet, daß** ein Freisprechmodus erkannt wird, wenn über eine definierte Zeit eine Störung vorhanden ist.

9. Verfahren nach Anspruch 8, **dadurch gekennzeichnet, daß** die definierte Zeit im Bereich von 100 - 1000 Millisekunden liegt.

10. Autoradio mit einer Freisprecheinrichtung für ein Mobiltelefon (1) zur Wiedergabe eines Audio-Signals des Mobiltelefons (1) mit einer Audio-Eingangsschnittstelle (2) für das Mobiltelefon (1) und einem an die Audio-Eingangsschnittstelle (2) gekoppelten Audio-Verstärker (4), **gekennzeichnet durch** eine Störerkennungsschaltung für durch das Time-Multiplex beim Betrieb des Mobiltelefons (1) entstehende Störungen zum Umschalten des Verstärkungsfaktors (v) des Audio-Verstärkers (4) auf einen vordefinierten Wert, sobald ein Freisprechmodus durch eine Störung erkannt wird.

11. Autoradio nach Anspruch 10, **gekennzeichnet durch**
- eine Einrichtung zum Messen des Eingangssignalpegels der Audio-Eingangsschnittstelle (2) und zur Bildung des Mittelwertes des gemessenen Eingangssignalpegels,
- eine Pegelvergleichseinrichtung zum Berechnen des vordefinierten Wertes des Verstärkungsfaktors (v) durch Minimieren der Differenz des gebildeten Mittelwertes und einem Vergleichspegel, und
- einen Speicher (16) für den berechneten, vordefinierten Wert.

12. Autoradio nach Anspruch 11, **gekennzeichnet durch** ein schaltbares Widerstandsnetzwerk (5) zum Einstellen des Verstärkungsfaktors (v) des Audio-Verstärkers (4), wobei der vordefinierte Wert des Verstärkungsfaktors (v) für den Freisprechmodus als Kombination des zur Einstellung der vordefinierten Verstärkungsfaktors (v) zu schaltenden Widerstände (6a, 6b, 6c) abgespeichert wird.

13. Autoradio nach Anspruch 12, **dadurch gekennzeichnet, daß**
- das schaltbare Widerstandsnetzwerk (5) in den Rückkoppelungskreis an den Verstärkereingang (8) und den Verstärkerausgang (9) des Audio-Verstärkers (4) geschaltet ist, und
- die Pegelvergleichseinrichtung (15) über eine Reihenschaltung von einem Gleichrichter (10), einem Tiefpaß (11), einem Analog/Digital-Wandler (12) und einem digitalen Tiefpaß (11) an den Verstärkerausgang (9) geschaltet ist.

14. Autoradio nach einem der Ansprüche 10 bis 13, **dadurch gekennzeichnet, daß** eine Frequenzbandbreite des Audio-Signals des Mobiltelefons (1) kontinuierlich an den Audio-Verstärker (4) geschaltet ist und ein Schaltelement vorgesehen ist, um ausschließlich das Mobiltelefon (1) an den Audio-Verstärker (4) und den Verstärkungsfaktor (v) auf den vordefinierten Wert zu schalten.

15. Autoradio nach einem der Ansprüche 10 bis 13, **gekennzeichnet durch** eine Auswerteeinheit zum Auswerten von Signalstörungen bei einer definierten Frequenz des Audio-Signals an dem Audio-Verstärker (4) zur Erkennung eines Freisprechmodus.

16. Autoradio nach Anspruch 15, **dadurch gekennzeichnet, daß** die definierte Frequenz bei etwa 217 Hz liegt.

17. Autoradio nach Anspruch 15 oder 16, **dadurch gekennzeichnet, daß** ein Freisprechmodus erkannt wird, wenn über eine definierte Zeit eine Störung vorhanden ist.

18. Autoradio nach Anspruch 17, **dadurch gekennzeichnet, daß** die definierte Zeit im Bereich von 100 bis 1000 Millisekunden liegt.
